# EUROPEAN PATENT APPLICATION

(11) **EP 4 827 131 A1**
(43) Date of publication of application: **21.10.2026**
(21) Application number: 23962367.1
(22) Date of filing: 22.12.2023
(51) Int. Cl.: H04W 4/80, G07B 15/04, H04W 4/02, G01S 13/02, G06Q 20/14

(54) **METHOD AND DEVICE FOR ULTRA-WIDE BAND COMMUNICATION-BASED TRANSACTION**

(71) Applicant: Samsung Electronics Co., Ltd., Suwon-si, Gyeonggi-do 16677 (KR)
(72) Inventor: CHOI, Junyoung, Suwon-si, Gyeonggi-do 16677 (KR); SEO, Jinwook, Suwon-si, Gyeonggi-do 16677 (KR); LEE, Joohyun, Suwon-si, Gyeonggi-do 16677 (KR)
(74) Representative: Gulde & Partner
(86) International application number: PCT/KR2023/021464
(87) International publication number: WO 2025/135261

(57) **Abstract**

A method performed by a first ultra-wide band (UWB) device according to an embodiment of the present disclosure may comprise the operations of: estimating the location of the first UWB device on the basis of DL-TDoA; transmitting a transaction initiation message to a second UWB device through UWB communication when, according to the location estimation, the first UWB device enters a transaction area set in the second UWB device; receiving a transaction request message from the second UWB device through the UWB communication and transmitting a transaction response message corresponding to the transaction request message to the second UWB device through the UWB communication; and performing DS-TWR to determine whether the first UWB device moves out of the transaction area when the transaction between the first UWB device and the second UWB device is completed.

## Description

### (Technical Field)

The disclosure relates to UWB communication, and more particularly, to a method and device for UWB communication-based transaction.

### (Background Art)

The Internet is evolving from the human-centered connection network by which humans create and consume information to the Internet of Things (IoT) network by which information is communicated and processed between things or other distributed components. Another emerging technology is the Internet of Everything (IoE), which is a combination of the Big data processing technology and the IoT technology through, e.g., a connection with a cloud server. Implementing the IoT requires technical elements, such as sensing technology, wired/wireless communication and network infrastructure, service interface technology, and security technology. Recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the connected things to create new value for human life. The IoT may have various applications, such as the smart home, smart building, smart city, smart car or connected car, smart grid, health-care, or smart appliances, or state-of-the-art medical services, through convergence or integration of conventional information technology (IT) techniques and various industries.

As wireless communication systems evolve to provide various services, a need arises for a method for effectively providing such services. For example, it is possible to use a ranging technique for measuring the distance between electronic devices using ultra-wide band (UWB). UWB is a wireless communication technology that uses a very wide frequency band of several GHz or more in a baseband without using a wireless carrier.

### (Detailed Description of the Invention)

### (Technical Problem)

The disclosure proposes a method for a user terminal to perform payment in a gate system using UWB communication.

### (Technical Solution)

According to an embodiment of the disclosure, a method of a first ultra wide band (UWB) device may include: estimating a location of the first UWB device based on downlink-time difference of arrival (DL-TDoA); upon the first UWB device entering a transaction area configured in a second UWB device according to the location estimation, transmitting a transaction initiation message to the second UWB device through UWB communication; receiving a transaction request message from the second UWB device through UWB communication and transmitting a transaction response message corresponding to the transaction request message to the second UWB device through UWB communication; and upon completion of a transaction between the first UWB device and the second UWB device, performing double-sided two-way ranging (DS-TWR) to determine whether the first UWB device moves outside the transaction area.

According to an embodiment of the disclosure, a method of a second ultra wide band (UWB) device may include: upon a first UWB device entering a transaction area configured in the second UWB device according to location estimation based on downlink-time difference of arrival (DL-TDoA), receiving a transaction initiation message from the first UWB device through UWB communication; transmitting a transaction request message to the first UWB device through UWB communication and receiving a transaction response message corresponding to the transaction request message from the first UWB device through UWB communication; and upon completion of a transaction between the first UWB device and the second UWB device, performing double-sided two-way ranging (DS-TWR) to determine whether the first UWB device moves outside the transaction area.

According to an embodiment of the disclosure, a first ultra wide band (UWB) device includes a transceiver and a controller. The controller may estimate a location of the first UWB device based on downlink-time difference of arrival (DL-TDoA), upon the first UWB device entering a transaction area configured in a second UWB device according to the location estimation, transmit a transaction initiation message to the second UWB device through UWB communication, receive a transaction request message from the second UWB device through UWB communication and transmit a transaction response message corresponding to the transaction request message to the second UWB device through UWB communication, and upon completion of a transaction between the first UWB device and the second UWB device, perform double-sided two-way ranging (DS-TWR) to determine whether the first UWB device moves outside the transaction area.

According to an embodiment of the disclosure, a second ultra wide band (UWB) device includes a transceiver and a controller. The controller may, upon a first UWB device entering a transaction area configured in the second UWB device according to location estimation based on downlink-time difference of arrival (DL-TDoA), receive a transaction initiation message from the first UWB device through UWB communication, transmit a transaction request message to the first UWB device through UWB communication and receive a transaction response message corresponding to the transaction request message from the first UWB device through UWB communication, and upon completion of a transaction between the first UWB device and the second UWB device, perform double-sided two-way ranging (DS-TWR) to determine whether the first UWB device moves outside the transaction area.

### (Advantageous Effects)

Through the method for providing a UWB service of the disclosure, the user terminal may perform efficient gate payment using UWB communication.

### (Brief Description of Drawings)

FIG. 1 illustrates an example architecture of a UWB device.
FIG. 2 illustrates an example configuration of a communication system including a UWB device.
FIG. 3 illustrates an example structure of a frame used for UWB communication.
FIG. 4 illustrates a method for performing UWB communication by two UWB devices.
FIG. 5 illustrates a method for performing UWB ranging by two UWB devices.
FIG. 6 illustrates a structure of a ranging block and a round used for UWB ranging.
FIG. 7 illustrates an example architecture of a system of providing a UWB-based gate service according to an embodiment of the disclosure.
FIG. 8 illustrates an example operation scenario of a gate system according to an embodiment of the disclosure;
FIG. 9 illustrates a gate service procedure of a gate system according to an embodiment of the disclosure.
FIG. 10 illustrates an example operation scenario of a gate system according to an embodiment of the disclosure;
FIG. 11 is a flowchart illustrating a transaction performed in a gate system according to an embodiment of the disclosure.
FIG. 12 illustrates an exemplary operation scenario of a unidirectional gate system according to an embodiment of the disclosure.
FIG. 13 illustrates an exemplary operation scenario of a bi-directional gate system according to an embodiment of the disclosure.
FIG. 14 is a view illustrating an example of a time interval during which a transaction is performed in a gate system according to an embodiment of the disclosure.
FIG. 15 illustrates an example operation scenario of a gate system according to an embodiment of the disclosure.
FIG. 16 is a view illustrating an example of a time interval during which a transaction is performed in a gate system according to an embodiment of the disclosure.
FIG. 17 is a view illustrating a time when free pass permission (FPP) is granted in a gate system according to an embodiment of the disclosure.
FIG. 18 is a view illustrating a time when the FPP is revoked in a gate system according to an embodiment of the disclosure.
FIGS. 19A, 19B, and 19C illustrate examples in which the FPP is used in a gate system according to an embodiment of the disclosure.
FIG. 20 is a view illustrating messages for determining authenticity of the FPP in a gate system according to an embodiment of the disclosure.
FIG. 21 is a view illustrating messages for determining authenticity of the FPP in a gate system according to an embodiment of the disclosure.
FIG. 22 is a view illustrating a structure of a first electronic device according to an embodiment of the disclosure.
FIG. 23 is a view illustrating a structure of a second electronic device according to an embodiment of the disclosure.

### CMode for Carrying out the Invention)

Hereinafter, embodiments of the disclosure are described in detail with reference to the accompanying drawings.

In describing embodiments, the description of technologies that are known in the art and are not directly related to the disclosure is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the disclosure is not limited to the embodiments disclosed herein, and various changes may be made thereto. The embodiments disclosed herein are provided only to inform one of ordinary skill in the art of the category of the present disclosure. The disclosure is defined only by the appended claims. The same reference numerals refer to the same components throughout the specification.

In this case, it may be understood that each block of processing flowchart drawings and combinations of flowchart drawings may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or portion of code that includes one or more executable instructions to execute designated logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

In this case, the term "~unit" used in this embodiment means a hardware component such as software or field programmable gate array (FPGA) or application specific integrated circuit (ASIC), and "~unit" performs predetermined roles. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, an operation principle of the disclosure is described in detail with reference to accompanying drawings. When determined to make the subject matter of the disclosure unnecessarily unclear, the detailed description of known functions or configurations may be skipped in describing embodiments of the disclosure. Terms to be described below are terms defined considering functions in the disclosure, which may vary according to intentions or customs of users and operators. Therefore, the terms should be defined based on the overall disclosure.

Hereinafter, embodiments of the disclosure are described in detail with reference to the accompanying drawings. Further, although a communication system using UWB is described in connection with embodiments of the disclosure, as an example, embodiments of the disclosure may also apply to other communication systems with similar technical background or features. For example, a communication system using Bluetooth or ZigBee may be included therein. Further, embodiments of the disclosure may be modified in such a range as not to significantly depart from the scope of the disclosure under the determination by one of ordinary skill in the art and such modifications may be applicable to other communication systems.

When determined to make the subject matter of the disclosure unclear, the detailed description of the known art or functions may be skipped. Terms to be described below are terms defined considering functions in the disclosure, which may vary according to intentions or customs of users and operators. Therefore, the terms should be defined based on the overall disclosure.

In general, wireless sensor network technology is largely divided into a wireless local area network (WLAN) technology and a wireless personal area network (WPAN) technology according to the recognition distance. In this case, WLAN is a technology based on IEEE 802.11 which enables access to the backbone network within a radius of about 100m. WPAN is a technology based on IEEE 802.15 which includes Bluetooth, ZigBee, and ultra wide band (UWB). A wireless network in which such a wireless network technology is implemented may include a plurality of electronic devices.

UWB may refer to a short-range high-rate wireless communication technology using a wide frequency band of several GHz or more, low spectral density, and short pulse width (e.g., 1 nsec to 4 nsec) in a baseband state. UWB may mean a band itself to which UWB communication is applied. UWB may enable secure and accurate ranging between devices. Thus, UWB enables relative location estimation based on the distance between two devices or accurate location estimation of a device based on the distance from fixed devices (whose locations are known).

The terminology used herein is provided for a better understanding of the disclosure, and changes may be made thereto without departing from the technical spirit of the disclosure.

"Application dedicated file (ADF)" may be, e.g., a data structure in an application data structure that may host an application or application specific data.

"Application protocol data unit (APDU)" may be a command and a response used when communicating with the application data structure in the UWB device.

"Application specific data" may be, e.g., a file structure having a root level and an application level including UWB controllee information and UWB session data required for a UWB session.

"Controller" may be a ranging device that defines and controls ranging control messages (RCM) (or control messages).

"Controllee" may be a ranging device using a ranging parameter in the RCM (or control message) received from the controller.

Unlike "static STS," "dynamic scrambled timestamp sequence (STS) mode" may be an operation mode in which the STS is not repeated during a ranging session. In this mode, the STS may be managed by the ranging device, and the ranging session key that generates STS may be managed by a secure component.

"Applet" may be, e.g., an applet executed on the secure component including UWB parameters and service data. In this disclosure, Applet may be a FiRa Applet defined by FiRa.

"Ranging device" may be a device capable of performing UWB ranging. In the disclosure, the Ranging Device may be an Enhanced Ranging Device (ERDEV) defined in IEEE 802.15.4z or a FiRa Device defined by FiRa. The Ranging Device may be referred to as a UWB device.

"UWB-enabled Application" may be an application for UWB service. For example, the UWB-enabled Application may be an application using a Framework API for configuring an OOB Connector, a Secure Service, and/or a UWB service for a UWB session. In this disclosure, "UWB-enabled Application" may be abbreviated as an application or a UWB application. UWB-enabled Application may be a FiRa-enabled Application defined by FiRa.

"Framework" may be a component that provides access to Profiles, individual-UWB configuration and/or notifications. "Framework" may be, e.g., a collection of logical software components including Profile Manager, OOB Connector, Secure Service, and/or UWB service. In the disclosure, the Framework may be a FiRa Framework defined by FiRa.

"OOB Connector" may be a software component for establishing an out-of-band (OOB) connection (e.g., BLE connection) between Ranging Devices. In the disclosure, the OOB Connector may be a FiRa OOB Connector defined by FiRa.

"Profile" may be a previously defined set of UWB and OOB configuration parameters. In the disclosure, Profile may be a FiRa Profile defined by FiRa.

"Profile Manager" may be a software component that implements a profile available on the Ranging Device. In the disclosure, the Profile Manager may be a FiRa Profile Manager defined by FiRa.

"Service" may be an implementation of a use case that provides a service to an end-user.

"Smart Ranging Device" may be a ranging device that may implement an optional Framework API. In the disclosure, the Smart Ranging Device may be a FiRa Smart Device defined by FiRa.

"Global Dedicated File (GDF)" may be a root level of application specific data including data required to establish a USB session.

"Framework API" may be an API used by a UWB-enabled Application to communicate with the Framework.

"Initiator" may be a Ranging Device that initiates a ranging exchange.

"Object Identifier (OID)" may be an identifier of the ADF in the application data structure.

"Out-Of-Band (OOB)" may be data communication that does not use UWB as an underlying wireless technology.

"Ranging Data Set (RDS)" may be data (e.g., UWB session key, session ID, etc.) required to establish a UWB session when it is needed to protect confidentiality, authenticity and integrity.

"Responder" may be a ranging device that responds to the Initiator in a ranging exchange.

"STS" may be a ciphered sequence for increasing the integrity and accuracy of ranging measurement timestamps. The STS may be generated from the ranging session key.

"Secure Channel" may be a data channel that prevents overhearing and tampering.

"Secure Component" may be an entity (e.g., SE or TEE) having a defined security level that interfaces with UWBS for the purpose of providing RDS to UWBS, e.g., when dynamic STS is used.

"Secure Element (SE)" may be a tamper-resistant secure hardware component that may be used as a Secure Component in the Ranging Device.

"Secure ranging" may be ranging based on STS generated through a strong encryption operation.

"Secure Service" may be a software component for interfacing with a Secure Component, such as a Secure Element or Trusted Execution Environment (TEE).

"Service Applet" may be an applet on a Secure Component that handles service specific transactions.

"Service Data" may be data defined by a service provider that needs to be transferred between two ranging devices to implement a service.

"Service Provider" may be an entity that defines and provides hardware and software required to provide a specific service to an end-user.

"Static STS mode" is an operation mode in which STS is repeated during a session, and does not need to be managed by the Secure Component.

"Secure UWB Service (SUS) Applet" may be an applet on the SE that communicates with the applet to retrieve data needed to enable secure UWB sessions with other ranging devices. The SUS Applet may transfer corresponding data (information) to the UWBS.

"UWB Service" may be a software component that provides access to the UWBS.

"UWB Session" may be a period from when the controller and the controllee start communication through UWB until the communication stops. A UWB Session may include ranging, data transfer, or both ranging and data transfer.

"UWB Session ID" may be an ID (e.g., a 32-bit integer) that identifies the UWB Session, shared between the controller and the controllee.

"UWB session key" may be a key used to protect the UWB Session. The UWB Session Key may be used to generate the STS. In this disclosure, the UWB session key may be a UWB ranging session key (URSK), and may be abbreviated as a session key.

"UWB Subsystem (UWBS)" may be a hardware component implementing the UWB PHY and MAC specifications. UWBS may have an interface to Framework and an interface to Secure Component to search for RDS. In this disclosure, the UWB PHY and MAC specifications may be, e.g., FiRa PHY and FiRa MAC specifications defined by FiRa referring to IEEE 802.15.4/4z.

When determined to make the subject matter of the disclosure unnecessarily unclear, the detailed description of related known functions or features may be skipped in describing the disclosure.

Hereinafter, various embodiments of the disclosure are described with reference to the accompanying drawings.

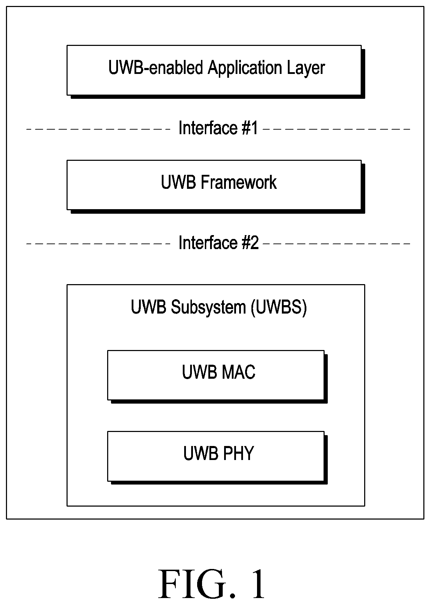

FIG. 1 illustrates an example architecture of a UWB device;

The UWB device (an electronic device) of FIG. 1 may be a ranging device supporting UWB ranging (e.g., UWB secure ranging). In an embodiment, the Ranging Device may be an Enhanced Ranging Device (ERDEV) defined in IEEE 802.15.4z or a FiRa Device defined by FiRa.

In the embodiment of FIG. 1, the UWB device may interact with other UWB devices through a UWB session.

The UWB device may implement a first interface (Interface #1) that is an interface between the UWB-enabled Application and the Framework, and the first interface allows the UWB-enabled application on the UWB device to use the UWB capabilities of the UWB device in a predetermined manner. In an embodiment, the first interface may be a Framework API or a proprietary interface, but is not limited thereto.

The UWB device may implement a second interface (Interface #2) that is an interface between the Framework and the UWB subsystem (UWBS). In an embodiment, the second interface may be a UWB Command Interface (UCI) or proprietary interface, but is not limited thereto.

Referring to FIG. 1, the UWB device may include a UWB-enabled Application, a Framework, and/or a UWBS including a UWB MAC Layer and a UWB Physical Layer. Depending on the embodiment, some entities may not be included in the UWB device, or additional entities (e.g., security layer) may be further included.

The UWB-enabled Application may trigger establishment of a UWB session by UWBS through the first interface. The UWB-enabled Application may use one of previously defined profiles (profile). For example, the UWB-enabled Application may use one of the profiles defined in FiRa or a custom profile. The UWB-enabled Application may use the first interface to handle related events, such as service discovery, ranging notifications, and/or error conditions.

The Framework may provide access to Profiles, individual-UWB settings and/or notifications. The Framework may be a set of software components. As described above, the UWB-enabled Application may interface with the Framework through the first interface, and the Framework may interface with the UWBS through the second interface. Software components of the Framework may include, e.g., Profile Manager, OOB Connector, Secure Service, and/or UWB service.

The Profile Manager may serve to manage profiles available on the UWB device. Profile may be a set of parameters required to establish communication between UWB devices. For example, a profile may include a parameter indicating which OOB secure channel is used, a UWB/OOB configuration parameter, a parameter indicating whether the use of a particular secure component is mandatory, and/or a parameter related to the file structure of the ADF.

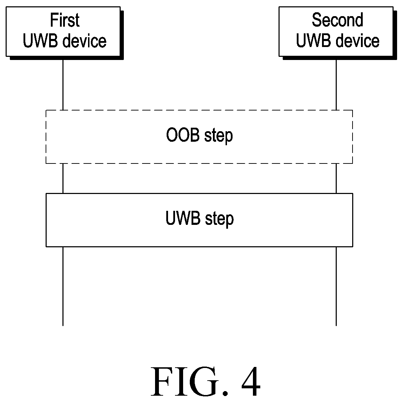

The OOB Connector may play a role to establish OOB connection between UWB devices. The OOB Connector may handle an OOB step including a discovery step and a connection step. The OOB step is described below with reference to FIG. 4.

The Secure Service may play a role of interfacing with a Secure Component, such as SE or TEE.

The UWB Service may perform a role of managing UWBS. The UWB Service may provide access to UWBS from the Profile Manager by implementing the second interface.

The UWBS may be a hardware component including a UWB MAC Layer and a UWB Physical Layer. The UWBS may perform UWB session management and may communicate with the UWBS of another UWB device. The UWBS may interface with the Framework through the second interface and may obtain the RDS from the Secure Component.

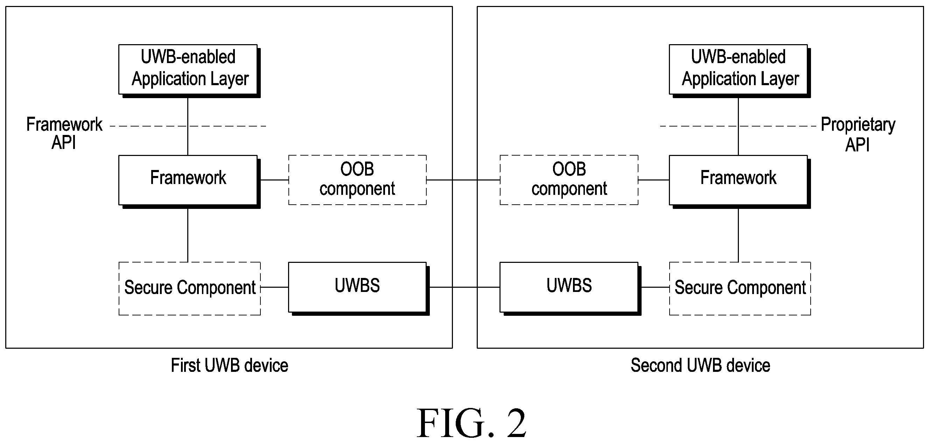

FIG. 2 illustrates an example configuration of a communication system including a UWB device;

Referring to FIG. 2, the communication system includes a first UWB device and a second UWB device. In an embodiment, the first UWB device and the second UWB device may be, e.g., the UWB device of FIG. 1 or an electronic device including the UWB device of FIG. 1.

The first UWB device may host, e.g., one or more UWB-enabled applications, which may be installed by the user (e.g., a mobile phone). It may be based on, e.g., the Framework API. The second UWB device does not provide a framework API, and for example, may use a proprietary interface to implement a specific UWB-enabled application. Unlike shown, according to an embodiment, both the first UWB device and the second UWB device may be Ranging Devices using the Framework API, or both the first UWB device and the second UWB device may be Ranging Devices using the proprietary interface.

The first UWB device and the second UWB device may include a UWB-enabled application layer, a framework, an OOB component, a secure component, and/or a UWBS. In the disclosure, the OOB component and/or the Secure Component may be optional components and, according to an embodiment, may not be included in the UWB device.

The Framework may serve to provide access to Profiles, individual-UWB settings and/or notifications. The Framework may be a set of software components and may include, e.g., Profile Manager, OOB Connector, Secure Service, and/or UWB service. For a description of each component, refer to the above description.

The OOB components may be hardware components including a MAC layer and/or a physical layer for OOB communication (e.g., BLE communication). The OOB components may communicate with OOB components of other devices. In an embodiment, the first UWB device and the second UWB device may create an OOB connection (channel) using the OOB components and exchange parameters for establishing a UWB session through the OOB channel. In this disclosure, the OOB components may be referred to as OOB subsystems.

The UWBS may be a hardware component including a UWB MAC Layer and a UWB Physical Layer. The UWBS may perform UWB session management and may communicate with the UWBS of another UWB device. In an embodiment, the first UWB device and the second UWB device may perform transaction of service data and UWB ranging through the UWB session established through the UWBSs using the exchanged parameters.

The Secure Components may be hardware components that interface with the framework and/or UWBS to provide RDS.

In the disclosure, the UWB-enabled Application Layers and/or the Frameworks may be implemented by an application processor (AP) (or processor). Accordingly, in the disclosure, it may be understood that the operations of the UWB-enabled Application Layers and/or the Frameworks are performed by an AP (or a processor).

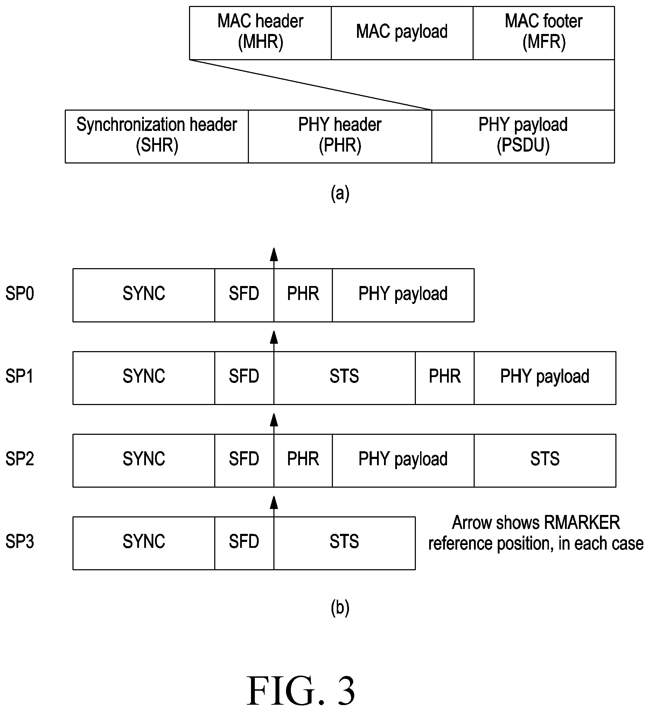

FIG. 3 illustrates an example structure of a frame used for UWB communication;

FIG. 3A illustrates an example structure of a frame to which the STS packet configuration is not applied, and FIG. 3B illustrates an example structure of a frame to which the STS packet configuration is applied. In an embodiment, the frame may be a ranging frame (RFRAME) for transferring ranging data (e.g., ranging initiation/reply/final message, etc.) or a data frame for transferring other data (e.g., service data, etc.).

Referring to FIG. 3A, the frame or a PHY PDU (PPDU) for transferring the frame may include a synchronization header (SHR), a PHY header (PHR), and a PHY payload (PSDU). The PSDU may include a MAC frame. The MAC frame may include a MAC header (MHR), a MAC payload and/or a MAC footer (MFR). The synchronization header of the PPDU may include a SYNC field and a start-of-frame delimiter (SFD). The SFD field may be a field indicating the end of the SHR and the start of the data field. For a description of each element/field included in the PPDU and MAC frame, refer to the description defined in IEEE 802.15.4/4z and/or FiRa.

Meanwhile, the PHY layer of the UWB device may include an optional mode to provide a reduced on-air time for high density/low power operation. In this case, the frame may include an encrypted sequence (i.e., STS) to increase the integrity and accuracy of the ranging measurement timestamp. The STS may be used for security ranging.

The structure of the PPDU (or frame) when the STS packet setting is applied (supported) may be as shown in FIG. 3B.

Referring to FIG. 3B, in the case of STS packet (SP) setting 0 (SP0), the STS field is not included in the PPDU (SP0 packet). In the case of SP setting 1 (SP1), the STS field is located immediately after the Start of Frame Delimiter (SFD) field and before the PHR field (SP1 packet). In the case of SP setting 2 (SP2), the STS field is located after the PHY payload (SP2 packet). In the case of SP setting 3 (SP3), the STS field is located immediately after the SFD field, and the PPDU does not include the PHR and data field (PHY payload) (SP3 packet). In other words, in the case of SP3, the frame (or UWB message) does not include the PHR and PHY payload.

SP0, SP1 and SP3 may be settings that must be supported as mandatory when the STS packet setting is supported, and SP2 may be an optionally supported setting.

FIG. 4 illustrates a method for performing UWB communication by two UWB devices;

In the embodiment of FIG. 4, a first UWB device may play a role as a controller (or controllee), and a second UWB device may play a role as a controllee (or controller), which is the role opposite to the role of the first UWB device. The first UWB device may play a role as an initiator (or responder), and the second UWB device may play a role as a responder (or initiator), which is the role opposite to the role of the first UWB device.
(1) Referring to FIG. 4, the first UWB device and the second UWB device may optionally perform an OOB step before the UWB step. In this disclosure, the OOB step may be referred to as an OOB connection step.

The OOB step may be a step performed to discover UWB devices through the OOB channel (e.g., BLE channel) and to establish and control a UWB session.

In an embodiment, the OOB step may include at least one of the following steps.
- discovering UWB devices and profiles (device and profile discovery)
- establishing an OOB connection (channel)
- establishing a secure channel to secure messages and data
- exchanging parameters for establishing a UWB session through the secure channel (e.g., UWB capability parameters (controllee capability parameters), UWB configuration parameters and/or session key-related parameters) (parameter exchange step)

In an embodiment, the parameter exchange step may include the step for the controllee to transfer controllee capability parameters/messages (UWB_CAPABILITY) to the controller, the step for the controller to transfer UWB configuration parameters/messages (UWB_CONFIGURATION) to the controllee, and/or the step for one UWB device to transfer session key-related parameters/messages (SESSION_KEY_INFO) for protecting the UWB session to the other UWB device.

In an embodiment, the controllee (UWB) capability parameter and/or session key parameter may be included and transmitted in the controllee information message (CONTROLLEE_INFO) which is the OOB message transferred from the controllee to the controller. In an embodiment, the UWB configuration parameter and/or session key parameter may be included and transmitted in the session data message (SESSION_DATA) which is the OOB message transferred from the controller to the controllee.

The controllee capability parameter (UWB_CAPABILITY) may include at least one parameter that provides information about the device capability of the controllee. For example, the controllee capability parameter may include a parameter for supporting the role of the device (initiator or responder), a parameter for multi-node support, a parameter for supporting STS configuration, a parameter for supporting a ranging method, a RFRAME feature capability parameter, a parameter for supporting Angle of Arrival (AoA), and/or a parameter for supporting Scheduled Mode.

The UWB configuration parameter (UWB_CONFIGURATION) may include at least one parameter used for configuration of a UWB session. For example, UWB configuration parameters may include a UWB session ID parameter, a ranging method parameter, a multi-node configuration parameter, an STS configuration parameter, a Scheduled Mode parameter, a time-of-flight (ToF) report parameter, an AoA-related parameter, a parameter indicating the number of slots per ranging round, a slot duration parameter, a responder slot index parameter, a MAC address mode parameter, a device MAC address parameter, a parameter indicating the number of controllees, and/or a destination (DST) MAC address parameter.

The session key-related parameter (SESSION_KEY_INFO) may include a session key-related parameter for Dynamic STS and/or a session key-related parameter for Static STS. For example, the session key-related parameter for Dynamic STS may include data exchanged to generate a UWB session key or data directly used as a UWB session key. For example, the Static STS may include an ID (Vendor ID) of a vendor that is a provider of the UWB-enabled application and any pre-defined value (Static STS IV) selected by the UWB-enabled application for the UWB device. The vendor ID may be used to set the phyVupper64 parameter for Static STS, and the Static STS IV may be used to set the vUpper64 parameter.

(2) The first UWB device and the second UWB device may perform a UWB step. In this disclosure, the UWB step may be referred to as an UWB connection step.

The UWB step may be a step which is performed to perform UWB ranging through the UWB session and transfer service data.

In an embodiment, the UWB step may include at least one of the following steps.
- Starting a UWB session (UWB Trigger)
- Performing UWB ranging to obtain the distance/location between two UWB devices
- Exchanging service data (transaction)

As described above, the OOB step is an optional step and may be omitted in some embodiments. For example, when discovery of a UWB device and/or establishment and control of a UWB session are performed through a UWB channel (in-band), the OOB step may be omitted. For example, when in-band discovery is performed, the OOB step of performing OOB discovery may be omitted. In this case, the UWB step may further perform an operation for discovering a UWB device through the UWB channel and exchanging parameters for UWB session configuration.

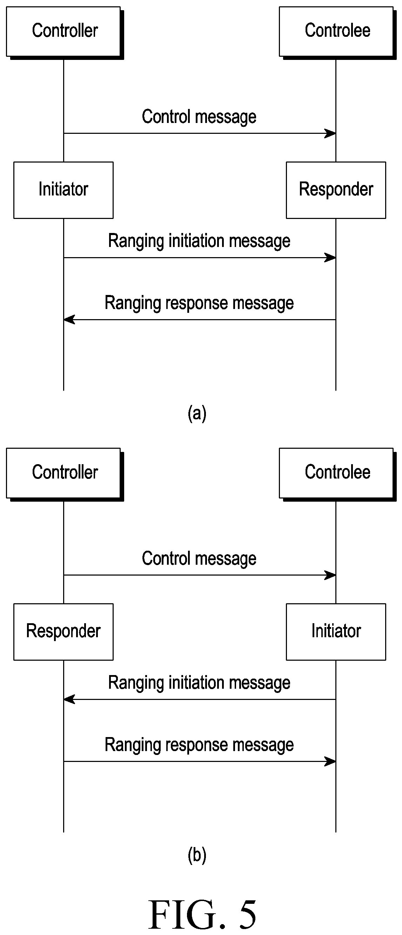

FIG. 5 illustrates a method for performing UWB ranging by two UWB devices.

(a) of FIG. 5 illustrates an embodiment in which the first UWB device operates as the controller/initiator, and the second UWB device operates as the controllee/responder. (b) of FIG. 5 illustrates an embodiment in which the first UWB device operates as the controller/responder, and the second UWB device operates as the controllee/initiator.

Referring to (a) and (b) of FIG. 5, the controller may transmit a control message for UWB ranging to the controllee. The ranging control message may be used to carry ranging parameter(s) for controlling and configuring a ranging procedure. In an embodiment, the control message may include information about the role (e.g., initiator or responder) of the ranging device, ranging slot index information, and/or address information about the ranging device.

The initiator may transmit a ranging Initiation message for initiating UWB ranging to the responder. In an embodiment, the initiator may transmit a ranging initiation message through an SP1 packet or an SP3 packet. When the ranging initiation message is transmitted through the SP1 packet, the control message may be included and transmitted in the PHY payload of the ranging initiation message. When the ranging initiation message is transmitted through the SP3 packet, the ranging initiation message does not include the PHR and PHY payloads.

The responder may transmit a ranging reply message to the initiator in response to the ranging initiation message. In an embodiment, the responder may transmit a ranging reply message through an SP1 packet or an SP3 packet. When the ranging reply message is transmitted through the SP1 packet, a first measurement report message may be included and transmitted in the PHY payload of the ranging reply message. In an embodiment, the first measurement report message may include an AoA measurement, a reply time measured by the responder and/or a list of round-trip time measurements for responders and responder addresses. The reply time field may indicate a time difference between the reception time of the ranging initiation message and the transmission time of the ranging reply message at the responder side. Based on this, single-sided two-way ranging (SS-TWR) may be performed. ToF calculation through SS-TWR follows the scheme defined in IEEE 802.15.4z or FiRa.

In the case of double-sided two-way ranging (DS-TWR), the initiator may further transmit a ranging final message to the responder to complete the ranging exchange. When the ranging final message is transmitted through the SP1 packet, a second measurement report message may be included and transmitted in the PHY payload of the ranging final message. In an embodiment, the second measurement report message may include an AoA measurement, the round-trip time for the first responder (first round-trip time) and/or a list of reply time measurements for responders and responder addresses. When the sender of the Measurement Report Message is the initiator, the First round-trip time field may indicate a time difference between the ranging initiation message from the initiator and the first ranging reply message from the first responder. Alternatively, when the sender of the Measurement Report Message is the responder, the First round-trip time field may indicate a time difference between the ranging reply message from the responder and the ranging final message from the initiator. Based on this, DS-TWR may be performed. Time-of-flight (ToF) calculation through DS-TWR follows the scheme defined in IEEE 802.15.4z or FiRa.

According to an embodiment, the above-described first measurement report message and/or second measurement report message may not be included in the ranging reply message and/or the ranging final message but may be transmitted as separate messages. For example, when the non-deferred mode is applied, the measurement report message may be transmitted through the data frame after the ranging exchange.

Meanwhile, the initiator and responder may perform UWB ranging according to a preset Schedule Mode. For example, in the time-scheduled ranging mode, the controller may know the IDs of all controllees and may designate an accurate schedule of ranging transmission. As another example, in the contention-based ranging mode, the controller does not know the number and ID of the controllees, and thus UWB devices compete with each other. In this case, a collision may occur between the responding devices.

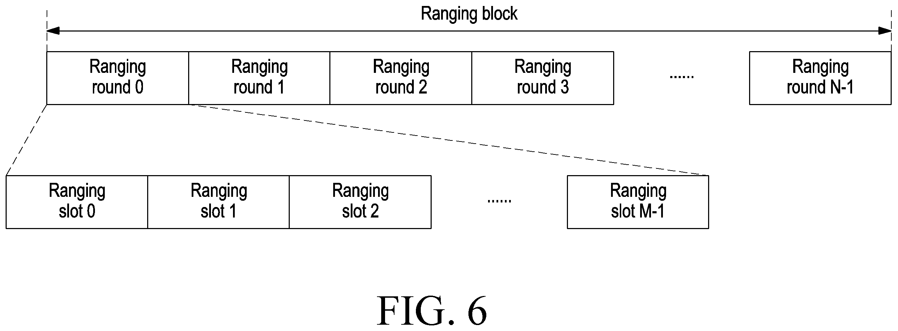

FIG. 6 illustrates a structure of a ranging block and a round used for UWB ranging;

In this disclosure, the ranging block refers to a time period for ranging. The ranging round may be a period of sufficient duration to complete one entire range-measurement cycle in which a set of UWB devices participating in a ranging exchange involves. The ranging slot may be a sufficient period for transmission of at least one ranging frame (RFRAME) (e.g., ranging initiation/reply/final message, etc.).

As shown in FIG. 6, one ranging block may include at least one ranging round. Each ranging round may include at least one ranging slot.

When the ranging mode is a block-based mode, a mean time between contiguous ranging rounds may be a constant. Alternatively, when the ranging mode is an interval-based mode, the time between contiguous ranging rounds may be dynamically changed. In other words, the interval-based mode may adopt a time structure having an adaptive spacing.

The number and duration of slots included in the ranging round may be changed between ranging rounds. This may be configured through a control message from the controller.

The UWB protocol is applicable to a use case for handling multiple users and providing fast authentication or payment. For example, the UWB protocol is applicable to a gate service in which users having a UWB device (e.g., smartphone) may process authentication or payment without interaction on the UWB device to pass a UWB-based gate system.

The disclosure proposes an example system architecture, example OOB procedure (e.g., BLE procedure), ranging procedure, and transaction procedure for providing a UWB service for multiple users, e.g., the gate system.

The following description of embodiments focuses primarily on the gate service (or smart gate service). However, this is merely an example. Embodiments of the disclosure are also applicable to various types of services (e.g., PoS payment service) requiring fast authentication or payment processing for multiple users. In this case, what has been described above in connection with FIGS. 1 to 6 may be referenced for the example system architecture, example OOB procedure (e.g., BLE procedure), ranging procedure, and transaction procedure for providing the service.

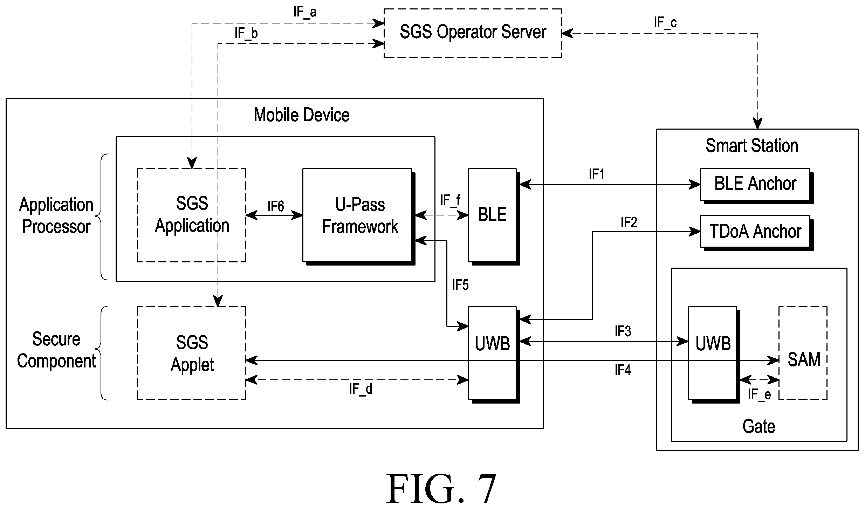

FIG. 7 illustrates an example architecture of a system of providing a UWB-based gate service according to an embodiment of the disclosure.

In the disclosure, the UWB-based gate service may be referred to as a gate service or a smart gate service (SGS), and the system that provides a UWB-based gate service may be referred to as a gate system or a smart gate system.

Referring to FIG. 7, the gate system may include a mobile device, a smart station and/or an SGS operator server. In this disclosure, the mobile device may be referred to as a first UWB device, and the smart station may be referred to as a second UWB device.
(1) The mobile device may include a framework (U-Pass framework), an SGS application, an SGS applet, a BLE component (subsystem), and/or a UWB component (subsystem). In an embodiment, the framework, the SGS application, the SGS applet, the BLE component, and/or the UWB component of the mobile device may be examples of the framework, UWB-enabled application, applet, OOB component, and UWB component, respectively, of the UWB device described above in connection with, e.g., FIG. 1.

The framework may support at least one of the following functions.
- Estimate the location of the mobile device during the Downlink-TDoA (DL-TDoA) round
- Implement procedures for performing UWB ranging and transaction
- Provide a set of APIs for the SGS operator's application (SGS application) and provide an interface between the framework and UWB components.
- Trigger UWB communication (component) when BLE advertisement is received from smart station.

The SGS application may support at least one of the following functions.
- When requested by the framework, provide anchor and UWB block structure deployment information
- Provide the framework with the AID of SGS applets and the version of the SGS applet protocol
- Communication with the SGS operator server to initiate service application installation, station specific information retrieval (e.g., anchor map), and token retrieval or renewal process

The SGS applet may support at least one of the following functions.
- Hosted on a secure component (e.g., SE or TEE) capable of communicating through a UWB interface.
- Implement transaction protocol for gate service
- Support APDU command

The BLE component may be used to receive at least one BLE message from the smart station when the mobile device enters the service area of the gate system.

The UWB component may be used to estimate the location of the mobile device, e.g., by DL-TDoA, and/or may be used to communicate with a specific gate to perform UWB ranging and transactions.

(2) The smart station may include at least one BLE anchor, at least one TDoA anchor, and/or at least one gate (gate device). In this disclosure, the TDoA anchor may be referred to as a DL-TDoA anchor.

The BLE anchor may be used to provide general station information about the mobile device and to inform that the mobile devices are entering the service area of the gate system.

In an embodiment, the BLE anchor may support a role as a GAP broadcaster, a role as a GATT server, and/or Broadcast advertising physical channel PDU.

The DL-TDoA anchor may be deployed in the service area of the gate system. The DL-TDoA anchor may broadcast a UWB message at a specific time. This UWB message may be used by the mobile device to estimate its location.

The gate device may include at least one UWB component (sub-system) and/or a security authentication module. The UWB component may be an example of the UWB subsystem described above in connection with FIG. 1 and the like. In an embodiment, the gate device may include at least one anchor, and each anchor may include at least one UWB component.

The UWB component may be used to communicate with the mobile device for gate access and gate ranging, so as to identify whether the mobile device is within an effective range to perform the transaction procedure and pass through the gate.

In an embodiment, the UWB component may support at least one of the following features.
- Perform DS-TWR
- Perform gate connection and gate ranging
- Provide an interface to the security authentication module

The security authentication module may be used to verify whether the mobile device is authenticated to use the gate system.

In an embodiment, the security authentication module may support at least one of the following features.
- Provides an interface to the UWB component
- Capability of communication through UWB interface
- Capability for synchronization with the SGS operator server

(3) The SGS operator server may manage the entire gate system. To this end, the SGS operator server may communicate with the mobile device and smart station.

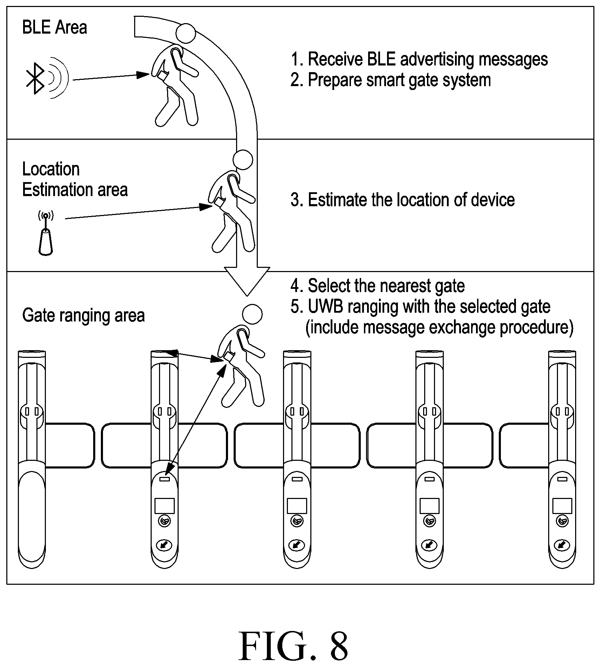

FIG. 8 illustrates an example operation scenario of a gate system according to an embodiment of the disclosure;

The gate system of FIG. 8 may be the gate system of FIG. 7.

Referring to FIG. 8, in operation 1, when the mobile device (or the user carrying the mobile device) enters the BLE area of the gate system, the mobile device may receive a BLE advertisement message (packet) from at least one BLE anchor of the smart station. The at least one BLE anchor may be located in the BLE area.

In operation 2, upon receiving the BLE advertisement message, a prerequisite procedure for the gate system may be performed. In other words, the gate system may be prepared. In an embodiment, the prerequisite procedure may be activated by the UWB component of the mobile device and be used to obtain authentication-related information and/or UWB-related information from the SGS operator server.

In operation 3, when the mobile device enters a location estimation area, the mobile device may estimate its location to determine the closest gate which it is to pass. In an embodiment, the mobile device may receive a TDoA message from at least one TDoA anchor of the smart station and estimate its location using a DL-TDoA scheme. Meanwhile, an application (SGS application) of the mobile device may provide or use locations of gate(s).

In operation 4, the mobile device may select the closest gate. In an embodiment, the mobile device may select the nearest gate based on the location of the gate(s) and the result of the location estimation.

In operation 5, the mobile device may perform a procedure for UWB ranging with the selected gate. After selecting the closest gate, the mobile device may participate in contention in a specific slot to perform UWB ranging with the gate. Slots (contention period) possible for participating in contention may be known through a UWB message by the gate. If the mobile device obtains a chance for transmission, UWB ranging and service protocol (transaction) may be performed with the gate. After proper authentication or payment capability is verified through exchange of messages and UWB ranging, the user may pass the gate.

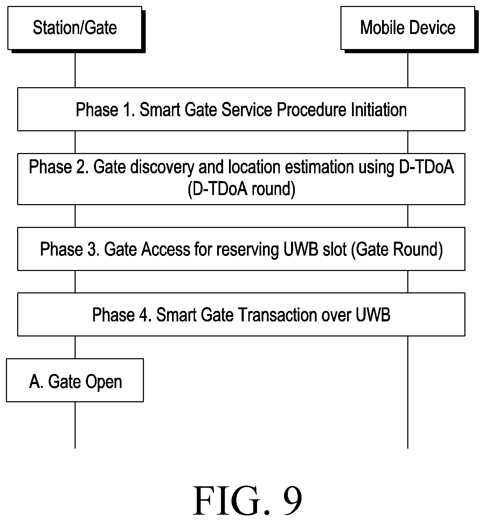

FIG. 9 illustrates a smart gate service procedure of a gate system according to an embodiment of the disclosure;

The gate system of FIG. 9 may be the gate system of FIG. 7.

Referring to FIG. 9, a smart gate service procedure may be performed between a smart station including at least one gate device and at least one mobile device.

The smart gate service procedure may include a smart gate service initiation phase (phase 1), a gate discovery and location estimation phase using DL-TDoA (phase 2), a gate access phase for UWB slot reservation (phase 3), and/or a transaction phase through UWB (phase 4). If the transaction (transaction phase) according to the smart gate service procedure is complete, a specific gate may be open. Thus, the user may enter or exit the specific gate.

In an embodiment, the smart gate service initiation phase may include, e.g., operations 1 and 2 of FIG. 8.

In an embodiment, the gate discovery and location estimation phase may include, e.g., operation 3 of FIG. 8.

In an embodiment, the gate access phase for UWB slot reservation may include, e.g., the access operation (participation in contention) of operations 4 and 5 of FIG. 8.

In an embodiment, the transaction phase through UWB may include, e.g., the UWB ranging and service protocol (transaction) operation of operation 5 of FIG. 8.

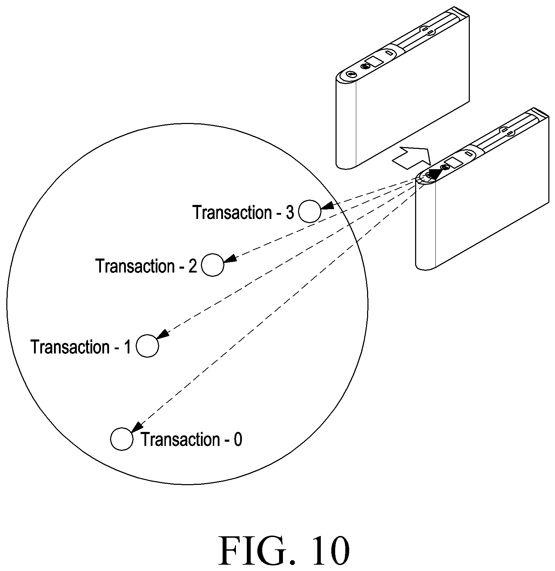

FIG. 10 illustrates an example operation scenario of a gate system according to an embodiment of the disclosure;

Referring to FIG. 10, a gate device and a mobile device included in the gate system may perform a transaction using a tagless gate transaction protocol.

A transaction may be performed in advance according to the distance between the mobile device and the gate device before the mobile device passes through the gate device. When a plurality of mobile devices approach the gate device, the transaction may be performed according to the distance between the mobile device and the gate device to minimize a delay.

However, when applying a near field communication (NFC) payment protocol in the gate system, performing the transaction in stages according to the distance may not be possible because the transaction procedure should proceed at once without interruption. Further, when applying the NFC payment protocol in the gate system, it is necessary to consider the barrier opening/closing characteristics (e.g., the state in which the barrier is open).

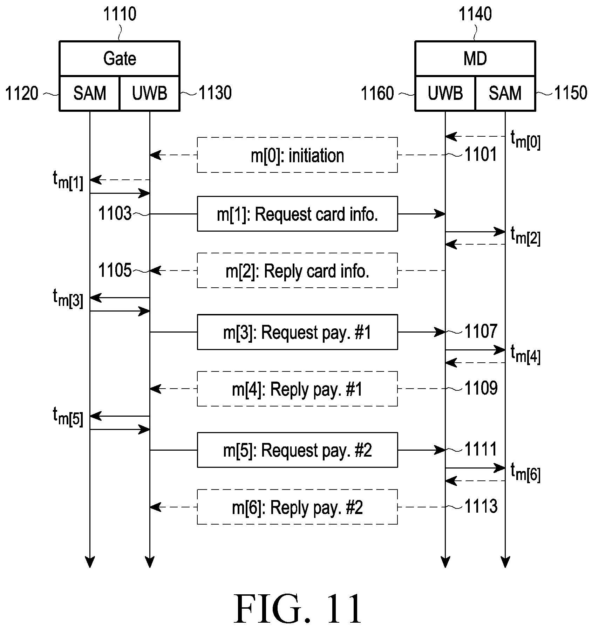

FIG. 11 is a flowchart illustrating a transaction performed in a gate system according to an embodiment of the disclosure.

Referring to FIG. 11, a gate device 1110 may include a secure application module (SAM) 1120 and a UWB module 1130, and a mobile device 1140 may include a SAM 1150 and a UWB module 1160.

In operation 1101, the UWB module 1160 of the mobile device 1140 may transmit a payment initiation message (m[0], initiation) to the UWB module 1130 of the gate device 1110. The SAM 1150 of the mobile device 1140 may generate the payment initiation message (m[0], initiation) at time t_{m[0]} and deliver the payment initiation message to the UWB module 1160.

In operation 1103, the UWB module 1130 of the gate device 1110 may transmit a payment method information request message (m[1], Request card info.) to the UWB module 1160 of the mobile device 1140. The SAM 1120 of the gate device 1110 may generate the payment method information request message (m[1], Request card info.) at time t_{m[1]} and deliver the payment method information request message to the UWB module 1130.

In operation 1105, the UWB module 1160 of the mobile device 1140 may transmit a payment method information response message (m[2], Reply card info.) to the UWB module 1130 of the gate device 1110. The SAM 1150 of the mobile device 1140 may generate the payment method information response message (m[2], Reply card info.) at time t_{m[2]} and deliver the payment method information response message to the UWB module 1160.

In operation 1107, the UWB module 1130 of the gate device 1110 may transmit a first payment request message (m[3], Request pay. #1) to the UWB module 1160 of the mobile device 1140. The SAM 1120 of the gate device 1110 may generate the first payment request message (m[3], Request pay. #1) at time t_{m[3]} and deliver the first payment request message to the UWB module 1130.

In operation 1109, the UWB module 1160 of the mobile device 1140 may transmit a first payment response message (m[4], Reply pay. #1) to the UWB module 1130 of the gate device 1110. The SAM 1150 of the mobile device 1140 may generate the first payment response message (m[4], Reply pay. #1) at time t_{m[4]} and deliver the first payment response message to the UWB module 1160.

In operation 1111, the UWB module 1130 of the gate device 1110 may transmit a second payment request message (m[5], Request pay. #2) to the UWB module 1160 of the mobile device 1140. The SAM 1120 of the gate device 1110 may generate the second payment request message (m[5], Request pay. #2) at time t_{m[5]} and deliver the second payment request message to the UWB module 1130.

In operation 1113, the UWB module 1160 of the mobile device 1140 may transmit a second payment response message (m[6], Reply pay. #2) to the UWB module 1130 of the gate device 1110. The SAM 1150 of the mobile device 1140 may generate the second payment response message (m[6], Reply pay. #2) at time t_{m[6]} and deliver the second payment response message to the UWB module 1160.

Operations 1101 to 1113 may be sequentially performed at once without interruption for the transaction in the gate system. Time points t_{m[0]} to t_{m[6]} may be a continuous time interval.

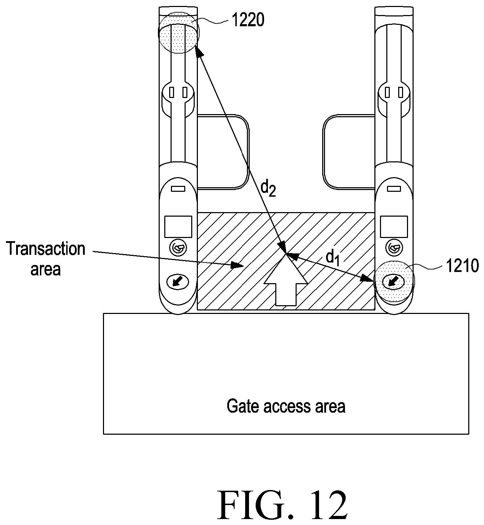

FIG. 12 illustrates an exemplary operation scenario of a unidirectional gate system according to an embodiment of the disclosure.

Referring to FIG. 12, in the unidirectional gate system, the gate device may include a first UWB module 1210 and a second UWB module 1220. Although FIG. 12 illustrates the first UWB module 1210 and the second UWB module 1220 included in the gate device for convenience of description, the technical spirit of the disclosure is not limited thereto, and the number and location of the UWB modules in the gate device may be implemented in various ways.

In FIG. 12, a gate access area for identifying whether the mobile device has approached the gate device and a transaction area for a transaction between the mobile device and the gate device may be separately configured.

In the gate access area, whether the mobile device has entered near the gate device may be identified based on the DL-TDoA location of the mobile device and the distance between the mobile device and the gate device.

In the transaction area, the location of the mobile device may be identified based on a first distance d1 between the first UWB module 1210 of the gate device and the mobile device and a second distance d2 between the second UWB module 1220 of the gate device and the mobile device. In the transaction area, the mobile device may perform a transaction (e.g., a payment procedure) with the first UWB module 1210 and the second UWB module 1220 of the gate device.

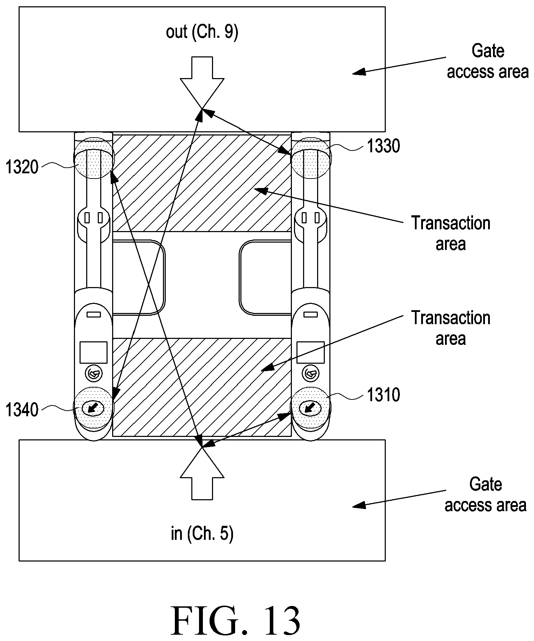

FIG. 13 illustrates an exemplary operation scenario of a bi-directional gate system according to an embodiment of the disclosure.

Referring to FIG. 13, in the bi-directional gate system, the gate device may include a first UWB module 1310, a second UWB module 1320, a third UWB module 1330, and a fourth UWB module 1340. Although FIG. 12 illustrates the first UWB module 1310, the second UWB module 1320, the third UWB module 1330, and the fourth UWB module 1340 included in the gate device for convenience of description, the technical spirit of the disclosure is not limited thereto, and the number and location of the UWB modules in the gate device may be implemented in various ways.

In FIG. 13, a gate access area for identifying whether the mobile device has approached the gate device and a transaction area for a transaction between the mobile device and the gate device may be separately configured.

In the gate access area, whether the mobile device has entered near the gate device may be identified based on the DL-TDoA location of the mobile device and the distance between the mobile device and the gate device. To use the DL-TDoA signal as a reference, a first radio channel (e.g., channel 5) for DL-TDoA in the gate in direction may be configured, and a second radio channel (e.g., channel 9) for DL-TDoA in the gate out direction may be configured.

In the transaction area in the gate in direction, the location of the mobile device may be identified based on a first distance d1 between the first UWB module 1310 of the gate device and the mobile device and a second distance d2 between the second UWB module 1320 of the gate device and the mobile device. In the transaction area in the gate in direction, the mobile device may perform a transaction (e.g., a payment procedure) with the first UWB module 1310 and the second UWB module 1320 of the gate device.

In the transaction area in the gate out direction, the location of the mobile device may be identified based on a third distance d3 between the third UWB module 1330 of the gate device and the mobile device and a fourth distance d4 between the fourth UWB module 1340 of the gate device and the mobile device. In the transaction area in the gate out direction, the mobile device may perform a transaction (e.g., a payment procedure) with the third UWB module 1330 and the fourth UWB module 1340 of the gate device.

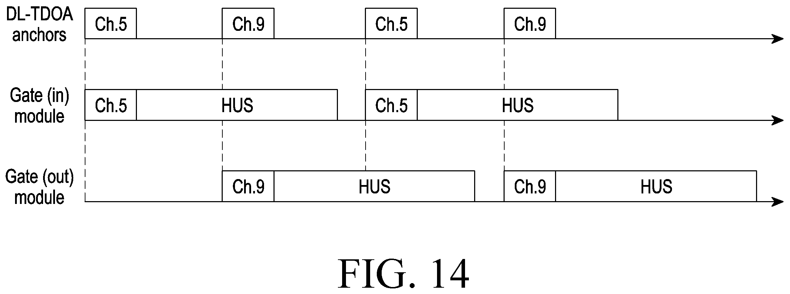

FIG. 14 is a view illustrating an example of a time interval during which a transaction is performed in a gate system according to an embodiment of the disclosure.

Referring to FIG. 14, DL-TDOA anchors may use a first radio channel (e.g., channel 5) for DL-TDoA on the gate in side and a second radio channel (e.g., channel 9) for DL-TDoA on the gate out side. The DL-TDOA anchors may be disposed in the gate access area on the gate in side and/or the gate access area on the gate out side of the gate device. According to an embodiment, the DL-TDOA anchors may be included in the gate device. According to another embodiment, the DL-TDOA anchors may be implemented outside the gate device. At least one DL-TDoA anchor may broadcast a UWB message at a specific time. The UWB message may be used by the mobile device to estimate the location of the mobile device.

A gate in module in the gate device may perform a UWB communication-based transaction in a hybrid UWB session (HUS) with the mobile device entering or leaving from the gate in side through a first radio channel (e.g., channel 5). In the transaction area, the mobile device may perform the UWB communication-based transaction with the gate in module.

A gate out module in the gate device may perform a UWB communication-based transaction in the HUS with the mobile device entering or leaving from the gate out side through a second radio channel (e.g., channel 9). In the transaction area, the mobile device may perform the UWB communication-based transaction with the gate out module.

Communication on the gate in side and communication on the gate out side may be performed in parallel by operating different radio channels between the gate in module and the gate out module in the gate device.

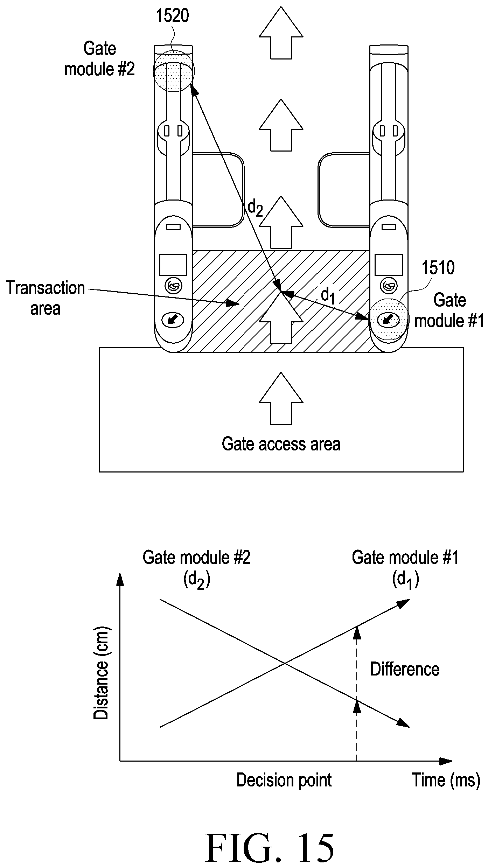

FIG. 15 illustrates an example operation scenario of a gate system according to an embodiment of the disclosure.

Referring to FIG. 15, in the gate system, the gate device may include a first UWB module 1510 and a second UWB module 1520. Although FIG. 15 illustrates the first UWB module 1510 and the second UWB module 1520 included in the gate device for convenience of description, the technical spirit of the disclosure is not limited thereto, and the number and location of the UWB modules in the gate device may be implemented in various ways.

In FIG. 15, a gate access area for identifying whether the mobile device has approached the gate device and a transaction area for a transaction between the mobile device and the gate device may be separately configured.

When the mobile device enters the gate device, in the gate access area, the mobile device may receive a message broadcast from the DL-TDoA located inside or near the gate device and estimate the location of the mobile device based on the message.

When the mobile device passes through the access area and enters the transaction area, based on a first distance d1 between the first UWB module 1510 of the gate device and the mobile device and a second distance d2 between the second UWB module 1520 of the gate device and the mobile device, the mobile device may perform a transaction (e.g., a payment procedure) with the first UWB module 1510 and/or the second UWB module 1520 of the gate device. For example, as the mobile device passes through the access area, the first distance d1 according to the ranging result may increase and the second distance d2 may decrease. For example, the mobile device may identify the difference between the first distance d1 and the second distance d2 according to the ranging result and estimate the location of the mobile device within the access area.

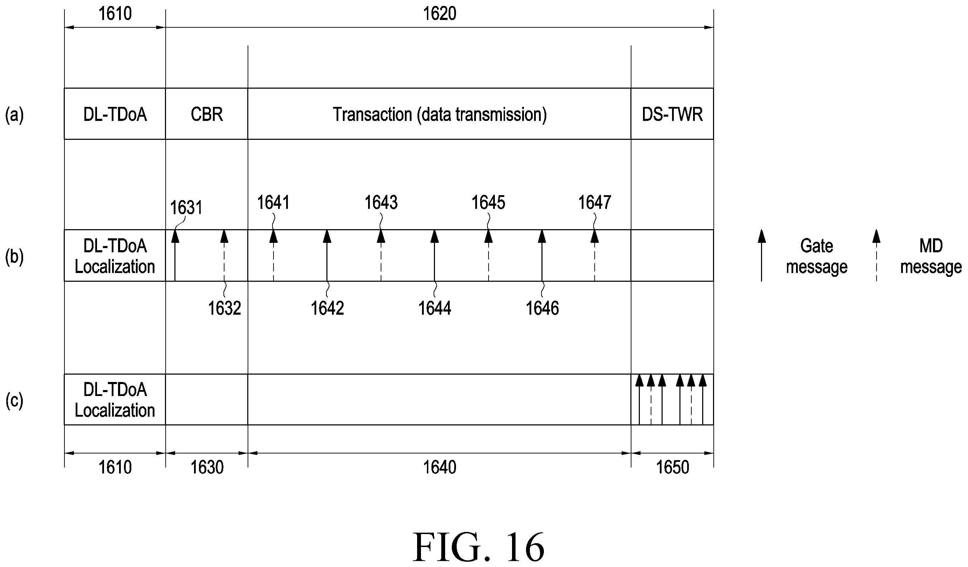

FIG. 16 is a view illustrating an example of a time interval during which a transaction is performed in a gate system according to an embodiment of the disclosure.

Referring to FIG. 16(a), a time interval 1610 for DL-TDoA and a time interval 1620 for HUS may be configured between the mobile device and the gate device. The time interval 1620 for HUS may include a time interval 1630 for contention based ranging (CBR), a time interval 1640 for a transaction (or data transmission), and a time interval 1650 for DS-TWR.

In the time interval 1610 for DL-TDoA, the mobile device may determine that the mobile device has entered the transaction area through DL-TDoA (DL-TDoA Localization).

Referring to FIG. 16(b), in the time interval 1630 for CBR, the mobile device may participate in contention in a specific slot to perform UWB ranging with the gate device. Available slots (contention period) for participating in the contention may be indicated through the UWB message by the gate device. If the mobile device acquires an opportunity for transmission, UWB ranging and a service protocol (transaction) may be performed with the gate. After appropriate authentication or payment capability is verified through UWB ranging and message exchanges, the mobile device may pass through the gate device.

According to an embodiment, in the time interval 1630 for CBR, the gate device may transmit a first UWB message 1631 including available slots (contention period) for participating in the contention to the mobile device. The mobile device may transmit a second UWB message 1632 to the gate device in the contention period in response to the first UWB message 1631.

In the time interval 1640 for the transaction (or data transmission), the mobile device and the gate device may perform the UWB communication-based transaction (or data transmission). The mobile device located within the transaction area may immediately start the transaction (or data transmission) and complete the payment.

In the time interval 1640 for the transaction (or data transmission), the mobile device may transmit a payment initiation message 1641 (e.g., the m[0], initiation of FIG. 11) to the gate device. Thereafter, the gate device may transmit a payment method information request message 1642 (e.g., the m[1], Request card info. of FIG. 11) to the mobile device. Thereafter, the mobile device may transmit a payment method information response message 1643 (e.g., the m[2], Reply card info. of FIG. 11) to the gate device. Thereafter, the gate device may transmit a first payment request message 1644 (e.g., the m[3], Request pay. #1 of FIG. 11) to the mobile device. Thereafter, the mobile device may transmit a first payment response message 1645 (e.g., the m[4], Reply pay. #1 of FIG. 11) to the gate device. Thereafter, the gate device may transmit a second payment request message 1646 (e.g., the m[5], Request pay. #2 of FIG. 11) to the mobile device. Thereafter, the mobile device may transmit a second payment response message 1647 (e.g., the m[6], Reply pay. #2 of FIG. 11) to the gate device. The mobile device and the gate device may complete the transaction (or data transmission) through transmission/reception of continuous messages 1641 to 1647.

Referring to FIG. 16(c), the gate device may grant free pass permission (FFP) to the mobile device having completed the transaction (or data transmission). The gate device may perform DS-TWR with the mobile device in the time interval 1650 for DS-TWR. According to an embodiment, when there are at least two or more UWB modules (or gate modules) in the gate device, the mobile device may perform DS-TWR with all of the at least two or more UWB modules (or gate modules).

As a result of performing DS-TWR, when determining that the mobile device has completely passed through the gate device, the gate device may revoke the FFP granted to the mobile device and perform UWB channel switching. According to an embodiment, based on a first distance d1 between the first UWB module (e.g., 1510 of FIG. 15) of the gate device and the mobile device and a second distance d2 between the second UWB module (e.g., 1520 of FIG. 15) of the gate device and the mobile device, the mobile device and/or the gate device may determine whether the mobile device has completely passed through the gate device (or the transaction area).

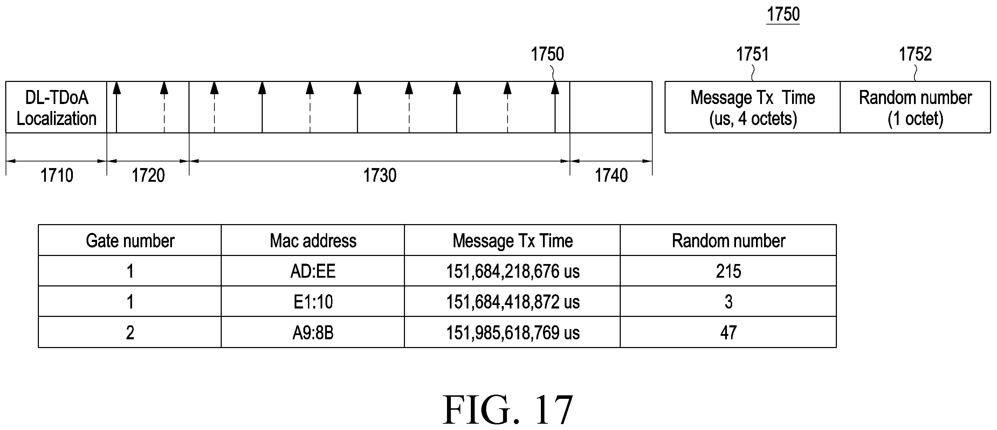

FIG. 17 is a view illustrating a time when free pass permission (FPP) is granted in a gate system according to an embodiment of the disclosure.

Referring to FIG. 17, a time interval 1710 for DL-TDoA, a time interval 1720 for CBR, a time interval 1730 for a transaction (or data transmission), and a time interval 1740 for DS-TWR may be configured between the mobile device and the gate device.

In the time interval 1730 for the transaction (or data transmission), the mobile device and the gate device may transmit/receive a plurality of messages for the transaction. Thereafter, the gate device may transmit a message 1750 including the free pass permission (FFP) to at least one mobile device having completed the transaction.

According to an embodiment, the message 1750 including the FFP may include a transmission time (Message Tx Time) 1751 for the message and a random number 1752. For example, the transmission time 1751 for the message included in the message 1750 including the FFP may be indicated in units of us and may be implemented with a size of 4 octets. For example, the random number 1752 included in the message 1750 including the FFP may be implemented with a size of 1 octet.

According to an embodiment, a server managing and/or operating at least one gate device may manage an FFP table for the at least one gate device. For example, the FFP table may include information on a first gate device, and the information on the first gate may include a gate number (e.g., 1), a MAC address (e.g., AD,EE), a transmission time (Message Tx Time) for the message including the FFP (e.g., 151,684,218,676 us), and a random number (e.g., 215). For example, the FFP table may include information on a second gate device, and the information on the second gate may include a gate number (e.g., 2), a MAC address (e.g., E1,10), a transmission time (Message Tx Time) for the message including the FFP (e.g., 151,684,418,872 us), and a random number (e.g., 3).

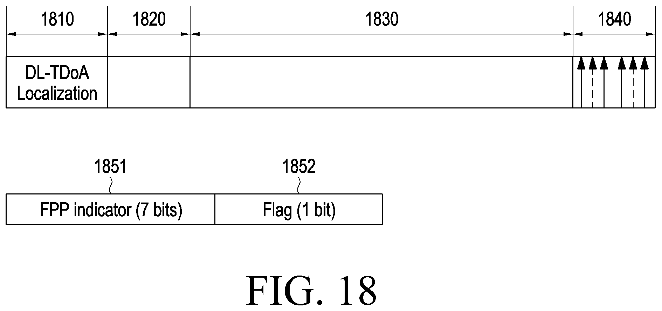

FIG. 18 is a view illustrating a time when the FPP is revoked in a gate system according to an embodiment of the disclosure.

Referring to FIG. 18, a time interval 1810 for DL-TDoA, a time interval 1820 for CBR, a time interval 1830 for a transaction (or data transmission), and a time interval 1840 for DS-TWR may be configured between the mobile device and the gate device.

As a result of performing DS-TWR in the time interval 1840 for DS-TWR, when determining that the mobile device has completely passed through the gate device, the gate device may revoke the FFP granted to the mobile device. According to an embodiment, based on a first distance d1 between the first UWB module (e.g., 1510 of FIG. 15) of the gate device and the mobile device and a second distance d2 between the second UWB module (e.g., 1520 of FIG. 15) of the gate device and the mobile device, the mobile device and/or the gate device may determine whether the mobile device has completely passed through the gate device (or the transaction area).

In the time interval 1840 for DS-TWR, the mobile device may transmit information for FFP return by data piggybacking onto the DS-TWR message to the gate device. The gate device may transmit a DS-TWR message including information for FFP revocation to the mobile device.

According to an embodiment, the information for FFP return and the information for FFP revocation may include an FPP indicator 1851 (e.g., set to 7 bits) and a flag 1852 (e.g., set to 1 bit). According to an embodiment, when the flag in the information for FFP return is a first value (e.g., 1), and the flag in the information for FFP revocation is the same first value (e.g., 1), the mobile device and the gate device may determine that the mobile device has passed through the gate device, and the FFP for the mobile device may be revoked. According to an embodiment, the revoked FFP may be deleted from the FFP table managed by the server.

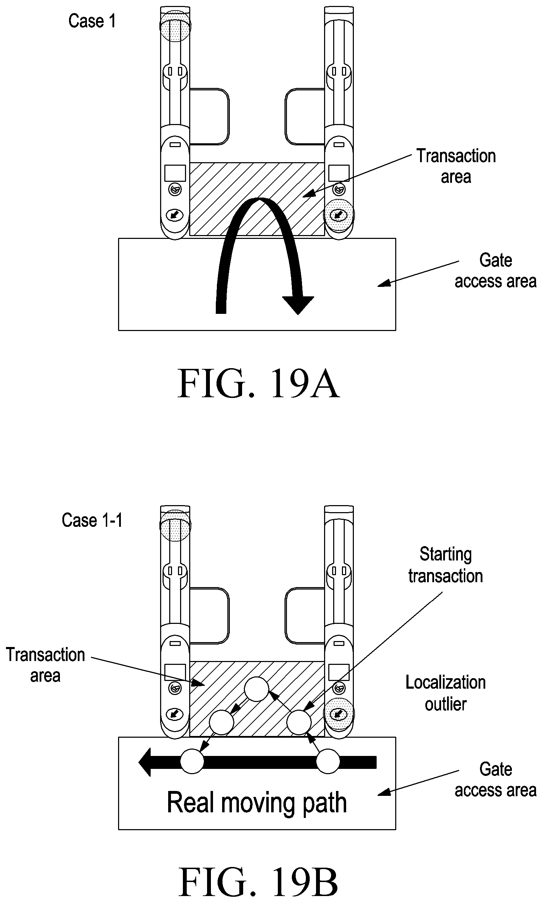

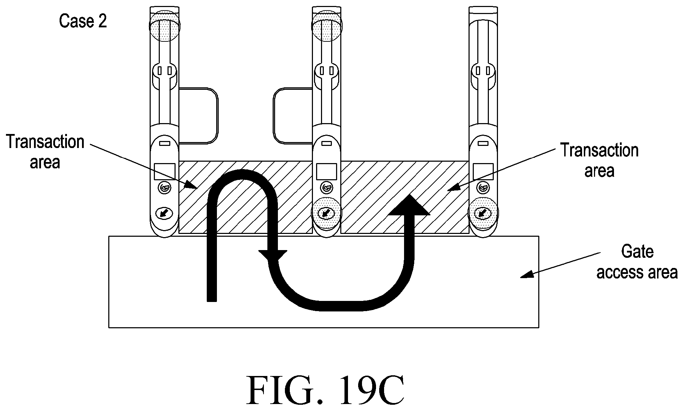

FIGS. 19A, 19B, and 19C illustrate examples in which the FPP is used in a gate system according to an embodiment of the disclosure.

Major examples of scenarios requiring the free pass permission (FPP) in the disclosure are as follows.

When the transaction is completed due to movement of users (or mobile devices) that is difficult to cope with and DL-TDoA error (FIG. 19A);

When the transaction is completed but the mobile device has not passed through the gate device (FIG. 19B);

When the transaction is completed at a gate device but the mobile device passes through another gate device (FIG. 19C);

Referring to FIG. 19A, when the mobile device located in the gate access area unintentionally remains in the transaction area for a predetermined time or longer and the transaction is completed, the gate device may grant the FFP for the mobile device so that the mobile device does not perform the transaction again later.

Referring to FIG. 19B, when the mobile device located in the gate access area performs the transaction in the course of movement, the gate device may grant the FFP for the mobile device so that the mobile device does not perform the transaction again later.

Referring to FIG. 19C, when the mobile device located in the gate access area completes the transaction in the transaction area of a first gate device but passes through a second gate device, the first gate device and/or the second gate device may grant the FFP for the mobile device so that the mobile device does not perform the transaction again at the second gate device.

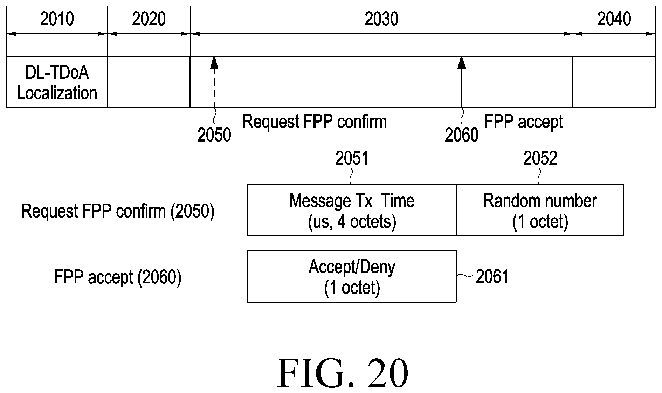

FIG. 20 is a view illustrating messages for determining authenticity of the FPP in a gate system according to an embodiment of the disclosure.

Referring to FIG. 20, a time interval 2010 for DL-TDoA, a time interval 2020 for CBR, a time interval 2030 for a transaction (or data transmission), and a time interval 2040 for DS-TWR may be configured between the mobile device and the gate device.

In the time interval 2030 for the transaction, the mobile device may transmit a message (Request FPP confirm) 2050 requesting identification on authenticity of the FPP to the gate device. The gate device may transmit a message (FPP accept) 2060 indicating authenticity of the FFP to the mobile device in response to the request message (Request FPP confirm).

According to an embodiment, the message (Request FPP confirm) 2050 requesting identification on authenticity of the FPP may include a transmission time (Message Tx Time) 2051 for the message and a random number 2052. For example, the transmission time 2051 for the message may be indicated in units of us and may be implemented with a size of 4 octets. For example, the random number 2052 may be implemented with a size of 1 octet.

According to an embodiment, the message (FPP accept) 2060 indicating authenticity of the FFP may include Accept/Deny information 2061 indicating authenticity of the FFP. For example, the Accept/Deny information 2061 may be implemented with a size of 1 octet.

According to an embodiment, when the transaction is completed but the mobile device has not passed through the gate device, payment cancellation may be requested after discarding the FPP when the lifetime of the FPP expires (e.g., lifetime, 1 min). According to an embodiment, an operation of the SAM for performing the payment cancellation may be implemented.

According to an embodiment, when the mobile device passes through another gate device other than the gate device where the mobile device completed the transaction, a message related to the FPP may be defined. According to an embodiment, the gate device and/or the mobile device may transmit the previously received Message Tx Time and Random number to another gate device through which the mobile device passes. According to an embodiment, the message including the received Message Tx Time and Random number may be processed (transmitted and/or received) through UWB-based communication without passing through the SAM. According to an embodiment, the gate device receiving the Request FPP confirm message may refer to the FPP Table. According to an embodiment, the gate device may perform gate open/close operation after determining authenticity of the corresponding FPP.

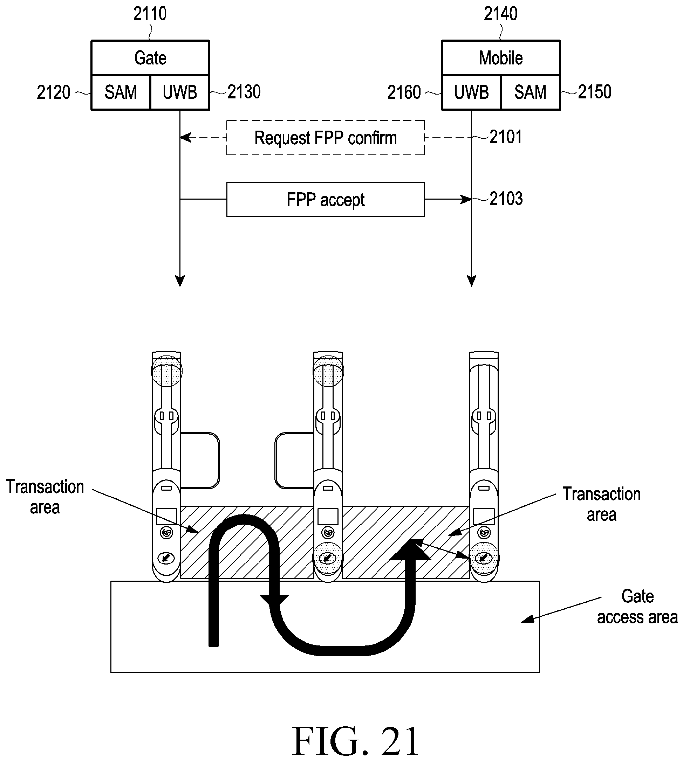

FIG. 21 is a view illustrating messages for determining authenticity of the FPP in a gate system according to an embodiment of the disclosure.

Referring to FIG. 21, a gate device 2110 may include a secure application module (SAM) 2120 and a UWB module 2130, and a mobile device 2140 may include a SAM 2150 and a UWB module 2160.

In operation 2101, the UWB module 2160 of the mobile device 2140 may transmit a message (Request FPP confirm) requesting FPP identification to the UWB module 1230 of the gate device 1210.

In operation 2103, the UWB module 2130 of the gate device 2110 may transmit a message (FPP accept) indicating authenticity of the FPP to the UWB module 2160 of the mobile device 2140.

For example, the mobile device located in the gate access area may complete the transaction in the transaction area of a first gate device but pass through a second gate device. In this case, the UWB module 2130 in the second gate device may receive the message (Request FPP confirm) requesting FPP identification from the mobile device and transmit a response message thereto to the mobile device.

In the disclosure, the mobile device may be implemented as a first UWB device, and the gate device may be implemented as a second UWB device.

According to an embodiment, the method of the first UWB device may include: estimating a location of the first UWB device based on downlink-time difference of arrival (DL-TDoA); upon the first UWB device entering a transaction area configured in a second UWB device according to the location estimation, transmitting a transaction initiation message to the second UWB device through UWB communication; receiving a transaction request message from the second UWB device through UWB communication and transmitting a transaction response message corresponding to the transaction request message to the second UWB device through UWB communication; and upon completion of a transaction between the first UWB device and the second UWB device, performing double-sided two-way ranging (DS-TWR) to determine whether the first UWB device moves outside the transaction area.

According to an embodiment, the method of the first UWB device may further include, upon completion of the transaction between the first UWB device and the second UWB device, receiving a first message including information regarding free pass permission (FFP) from the second UWB device.

According to an embodiment, the information regarding the FFP may include a transmission time (Message Tx Time) for the first message and a random number.

According to an embodiment, the method of the first UWB device may further include: determining, based on the DS-TWR, that the first UWB device has moved outside the transaction area; and transmitting a second message including a flag indicating that the first UWB device has moved outside the transaction area to the second UWB device.

According to an embodiment, the method of the first UWB device may further include: transmitting a third message (Request FPP confirm) for verifying authenticity of the FFP to the second UWB device; and receiving a fourth message (FPP accept/Deny) including information regarding the authenticity of the FFP from the second UWB device.

According to an embodiment, the third message may include a transmission time (Message Tx Time) for the first message and a random number.

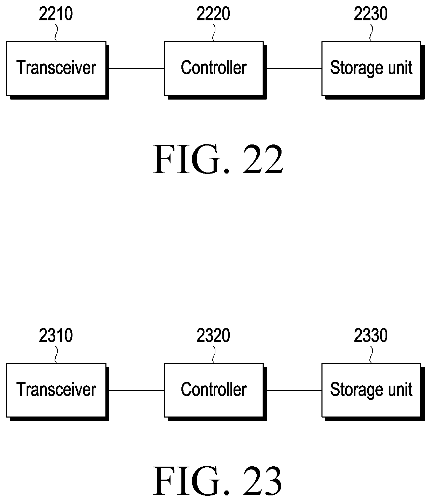

FIG. 22 is a view illustrating a structure of a first electronic device according to an embodiment of the disclosure.

In the embodiment of FIG. 22, the first electronic device may be an electronic device corresponding to a UWB device, including a UWB device, or including a part of a UWB device. The first electronic device may be implemented as the mobile device illustrated in FIGS. 1 to 21.

Referring to FIG. 22, the electronic device may include a transceiver 2210, a controller 2220, and a storage unit 2230. In the disclosure, the controller 2220 may be defined as a circuit, an application specific integrated circuit, or at least one processor.

The transceiver 2210 may transmit/receive signals with other entities. The transceiver 2210 may transmit/receive data to/from another device using, e.g., UWB communication and/or out-of-band (OOB) communication (e.g., BLE). The transceiver 2210 includes a transmitter and a receiver, and may also be referred to as a transceiver.

The controller 2220 may control the overall operation of the mobile device according to the embodiment proposed in the disclosure. For example, the controller 2220 may control a signal flow between blocks to perform the operation according to the flowchart described above. Specifically, the controller 2220 may control the operation of the mobile device (e.g., the operation of the framework) described with reference to FIGS. 1 to 21.

The storage unit 2230 may store at least one of information transmitted and received through the transceiver 2210 and information generated through the controller 2220. For example, the storage unit 2230 may store information and data required for the method described with reference to FIGS. 1 to 21. In an embodiment, the storage unit may include the above-described secure component.

FIG. 23 is a view illustrating a structure of a second electronic device according to an embodiment of the disclosure.

In the embodiment of FIG. 23, the second electronic device may be an electronic device corresponding to a UWB device, including a UWB device, or including a part of a UWB device. The second electronic device may be implemented as the gate device illustrated in FIGS. 1 to 21.

Referring to FIG. 23, the electronic device may include a transceiver 2310, a controller 2320, and a storage unit 2330. In the disclosure, the controller 2320 may be defined as a circuit, an application specific integrated circuit, or at least one processor.

The transceiver 2310 may transmit/receive signals with other entities. The transceiver 2310 may transmit/receive data to/from another device using, e.g., UWB communication and/or out-of-band (OOB) communication (e.g., BLE). The transceiver 2310 includes a transmitter and a receiver, and may also be referred to as a transceiver.

The controller 2320 may control the overall operation of the gate device according to the embodiment proposed in the disclosure. For example, the controller 2320 may control a signal flow between blocks to perform the operation according to the flowchart described above. Specifically, the controller 2320 may control the operation of the gate device (e.g., the operation of the framework) described with reference to FIGS. 1 to 21.

The storage unit 2330 may store at least one of information transmitted and received through the transceiver 2310 and information generated through the controller 2320. For example, the storage unit 2330 may store information and data required for the method described with reference to FIGS. 1 to 21. In an embodiment, the storage unit may include the above-described secure component.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the disclosure have been described above, various changes may be made thereto without departing from the scope of the disclosure. Thus, the scope of the disclosure should not be limited to the above-described embodiments, and should rather be defined by the following claims and equivalents thereof.

## Claims

1. A method of a first ultra wide band (UWB) device, the method comprising:
estimating a location of the first UWB device based on downlink-time difference of arrival (DL-TDoA);
upon the first UWB device entering a transaction area configured in a second UWB device according to the location estimation, transmitting a transaction initiation message to the second UWB device through UWB communication;
receiving a transaction request message from the second UWB device through UWB communication and transmitting a transaction response message corresponding to the transaction request message to the second UWB device through UWB communication; and
upon completion of a transaction between the first UWB device and the second UWB device, performing double-sided two-way ranging (DS-TWR) to determine whether the first UWB device moves outside the transaction area.

2. The method of claim 1, further comprising, upon completion of the transaction between the first UWB device and the second UWB device, receiving a first message including information regarding free pass permission (FFP) from the second UWB device.

3. The method of claim 2, wherein the information regarding the FFP includes a transmission time (Message Tx Time) for the first message and a random number.

4. The method of claim 2, further comprising:
determining, based on the DS-TWR, that the first UWB device has moved outside the transaction area; and
transmitting a second message including a flag indicating that the first UWB device has moved outside the transaction area to the second UWB device.

5. The method of claim 2, further comprising:
transmitting a third message (Request FPP confirm) for verifying authenticity of the FFP to the second UWB device; and
receiving a fourth message (FPP accept/Deny) including information regarding the authenticity of the FFP from the second UWB device.

6. The method of claim 5, wherein the third message includes a transmission time (Message Tx Time) for the first message and a random number.

7. The method of claim 1, wherein the first UWB device is implemented as a mobile device, and the second UWB device is implemented as a gate device.

8. A method of a second ultra wide band (UWB) device, the method comprising:
upon a first UWB device entering a transaction area configured in the second UWB device according to location estimation based on downlink-time difference of arrival (DL-TDoA), receiving a transaction initiation message from the first UWB device through UWB communication;
transmitting a transaction request message to the first UWB device through UWB communication and receiving a transaction response message corresponding to the transaction request message from the first UWB device through UWB communication; and
upon completion of a transaction between the first UWB device and the second UWB device, performing double-sided two-way ranging (DS-TWR) to determine whether the first UWB device moves outside the transaction area.

9. The method of claim 8, further comprising, upon completion of the transaction between the first UWB device and the second UWB device, transmitting a first message including information regarding free pass permission (FFP) to the first UWB device.

10. The method of claim 9, wherein the information regarding the FFP includes a transmission time (Message Tx Time) for the first message and a random number.

11. The method of claim 9, further comprising:
determining, based on the DS-TWR, that the first UWB device has moved outside the transaction area; and
receiving a second message including a flag indicating that the first UWB device has moved outside the transaction area from the first UWB device.

12. The method of claim 9, further comprising:
receiving a third message (Request FPP confirm) for verifying authenticity of the FFP from the first UWB device; and
transmitting a fourth message (FPP accept/Deny) including information regarding the authenticity of the FFP to the first UWB device.

13. The method of claim 12, wherein the third message includes a transmission time (Message Tx Time) for the first message and a random number.

14. A first ultra wide band (UWB) device comprising:
a transceiver; and
a controller, wherein the controller is configured to:
estimate a location of the first UWB device based on downlink-time difference of arrival (DL-TDoA);
upon the first UWB device entering a transaction area configured in a second UWB device according to the location estimation, transmit a transaction initiation message to the second UWB device through UWB communication;
receive a transaction request message from the second UWB device through UWB communication and transmit a transaction response message corresponding to the transaction request message to the second UWB device through UWB communication; and
upon completion of a transaction between the first UWB device and the second UWB device, perform double-sided two-way ranging (DS-TWR) to determine whether the first UWB device moves outside the transaction area.

15. A second ultra wide band (UWB) device comprising:
a transceiver; and
a controller, wherein the controller is configured to:
upon a first UWB device entering a transaction area configured in the second UWB device according to location estimation based on downlink-time difference of arrival (DL-TDoA), receive a transaction initiation message from the first UWB device through UWB communication;
transmit a transaction request message to the first UWB device through UWB communication and receive a transaction response message corresponding to the transaction request message from the first UWB device through UWB communication; and
upon completion of a transaction between the first UWB device and the second UWB device, perform double-sided two-way ranging (DS-TWR) to determine whether the first UWB device moves outside the transaction area.
